# EUROPEAN PATENT SPECIFICATION

(11) **EP 3 251 162 B1**
(45) Date of publication and mention of the grant of the patent: **20.03.2019**
(21) Application number: 16701880.3
(22) Date of filing: 26.01.2016
(51) Int. Cl.: H01M 8/04014, H01M 8/0432, H01M 8/04746

(54) **APPARATUS FOR THERMAL CONTROL IN A FUEL CELL**
VORRICHTUNG ZUR TEMPERATURKONTROLLE IN EINER BRENNSTOFFZELLE
DISPOSITIF DE CONTRÔL DE TEMPÉRATURE DANS UNE PILE À COMBUSTIBLE

(30) Priority: 29.01.2015 GB 201501491
(43) Date of publication of application: 06.12.2017
(73) Proprietor: LG Fuel Cell Systems Inc., North Canton, OH 44720 (US)
(72) Inventor: BOZZOLO, Michele, Derby Derbyshire DE22 3RL (GB); TRAVERSO, Alberto, 15067 Novi Ligure (AL) (IT); PIERCE, Adam, Rugby Warwickshire CV22 7EW (GB)
(74) Representative: Vossius & Partner Patentanwälte Rechtsanwälte mbB
(86) International application number: PCT/GB2016/050165
(87) International publication number: WO 2016/120609

(56) References cited:
- JP-A- H0 992 311
- JP-A- H07 296 834
- JP-A- 2004 127 736
- JP-A- 2009 081 052
- US-A1- 2004 197 239

## Description

### FIELD OF INVENTION

There is disclosed a method and apparatus for controlling an internal temperature of a fuel cell system. In particular, there is disclosed a method and apparatus for controlling an internal temperature of a high temperature fuel cell system.

### BACKGROUND

A fuel cell is an electrochemical conversion device that produces electricity directly from oxidizing a fuel.

High-temperature fuel cell systems including solid oxide fuel cells (SOFCs) and molten carbonate fuel cells (MCFCs) operate at very high temperatures and may run directly on practical hydrocarbons without the need for complex and expensive external fuel reformers necessary in low-temperature fuel cells. Some high-temperature fuel cells may operate at high enough temperatures that fuel may be reformed internally within the fuel cells. The invention will be described with reference to solid oxide fuel cells but it will be appreciated that the invention is applicable to any high-temperature fuel cell technology relying on internal reforming, and is also applicable to hydrogen fuelled systems that do not rely on internal reforming.

An SOFC has an anode and a cathode, the anode being supplied with a stream of fuel (typically methane), and the cathode being supplied with a stream of oxidant (typically air). SOFCs operate at relatively high temperatures, typically around 1000°C, to maintain low internal electrical resistances. It is a challenge to maintain such high temperatures, and a further challenge to reduce the temperature gradient across a plurality of fuel cells such as a fuel cell stack.

Thermal management of the fuel cell stack is important for balancing fuel cell performance and fuel cell life span. Typically, the fuel cell stack runs cold at the front, near the oxidant inlet of the stack, and hotter at the back, near the oxidant outlet of the stack. The temperature gradient is due to inefficiencies in the fuel cells arising from energy losses given off as ohmic heat. Consequently, each fuel cell module within the stack causes an additional temperature rise.

When the fuel cell stack runs hot, the performance of the fuel cell stack is good but the life of the fuel cells is reduced through increased degradation of the fuel cells. When the stack runs cold, the performance of the stack is poor, but the life of the fuel cells increases. There is a balance between fuel cell stack performance and fuel cell stack life and there is therefore an optimum temperature range over which the fuel cell stack would ideally be operated.

Embodiments of the present invention aim to mitigate some of the problems above by improving thermal management of the fuel cell stack.

US2006228596 discloses a method for operating a hybrid pressurized solid oxide fuel cell and turbine power generation system comprising a solid oxide fuel cell (SOFC) generator and a turbine generator. The method includes controlling airflow to the SOFC/turbine hybrid power generation system in accordance with power demand and utilizing electrical current drawn from the SOFC generator to regulate SOFC generator temperature.

### SUMMARY OF THE DISCLOSURE

According to a first aspect, there is provided a method for controlling an internal temperature of a high temperature fuel cell system comprising:
measuring a burner temperature of the high temperature fuel cell system comprising a fuel cell stack and a burner, the fuel cell stack comprising at least one fuel cell;
comparing the measured burner temperature with a predetermined burner temperature set point to identify a burner temperature difference between the measured burner temperature and the predetermined burner temperature set point;
controlling an amount of oxidant supplied to the burner to decrease or increase the amount of oxidant supplied to the burner to thereby reduce the burner temperature difference and control a fuel cell stack inlet temperature.

Controlling the amount of oxidant supplied to the burner allows the temperature within the fuel cell stack to be varied because the temperature within the fuel cell stack relates to fuel utilisation and to oxidant utilisation. A single oxidant supply may feed both the burner and the fuel cell stack, in which case controlling the amount of oxidant supplied to the burner is equivalent to controlling the amount of oxidant supplied to the fuel cell system.

Increasing the amount of oxidant supplied to the burner decreases the internal temperature of the fuel cell stack because oxidant utilisation is increased. Decreasing the amount of oxidant supplied to the burner increases the internal temperature of the fuel cell stack because oxidant utilisation is reduced. One of the benefits of the method is that the temperature of the fuel cell stack is controlled in a dynamic, effective and stable manner even when the load across the fuel cell stack varies. The benefit of measuring the burner temperature and basing a corrective feedback function on the burner temperature is that the temperature control is far quicker because thermal changes are identified more rapidly at the burner. Consequently, the method provides feedback on the thermal change to the fuel cell system more rapidly compared with, for example, determining the stack temperature.

The method may include the steps of:
determining a predetermined fuel cell stack current set point; and
determining a corrective function to vary the predetermined burner temperature set point based on the predetermined fuel cell stack current set point to reduce the burner temperature difference and control the fuel cell stack inlet temperature.

The method may include the steps of:
determining the fuel cell stack temperature by measuring the temperature of the at least one fuel cell in the fuel cell system;
comparing the measured stack temperature with a predetermined stack inlet temperature to identify a stack temperature difference; and
determining a corrective function to vary the predetermined burner temperature set point to reduce the stack temperature difference.

The amount of oxidant supplied to the fuel cell stack may be controlled by controlling a rotational speed of a turbo generator. Alternatively, the amount of oxidant supplied to the fuel cell stack may be controlled by controlling a valve.

Different methods for determining an average burner temperature difference may be used including calculating a mean, mode or median burner temperature difference, calculated from measurements received from a temperature sensor positioned at the burner.

Different methods for determining an average stack temperature difference may be used including calculating a mean, mode or median temperature difference, calculated from measurements received from a temperature sensor.

The fuel cell stack may be formed from a number of integrated blocks and each integrated block may be formed from a plurality of fuel cells. Integrated blocks may refer to strips of fuel cells and fuel cells may refer to fuel cell modules.

In some embodiments, the method may include determining the average burner temperature difference or the average stack temperature difference via a proportional integral derivative controller.

In some embodiments, the method may include controlling the amount of oxidant supplied to the burner and/or the solid oxide fuel cell based on the average temperature difference.

In some embodiments, the method may further include setting a predetermined turbo generator set point at which the turbo generator is operated. The turbo generator set point may correspond to a number of revolutions per minute.

The turbo generator set point may range from approximately 58,000 revolutions per minute to approximately 200,000 revolutions per minute. The person skilled in the art will appreciate that speed is relative the size of the fuel cell system and other speeds are envisaged.

Preferably, the turbo generator set point may range from approximately 72,000 revolutions per minute to approximately 96,000 revolutions per minute.

More preferably, the turbo generator set point may be approximately 84,000 revolutions per minute.

The temperature difference may correspond to an increase or a decrease in the number of revolutions per minute. The temperature difference may correspond to a predetermined system specific relationship.

According to a further aspect, there is provided a high temperature fuel cell system comprising:
a fuel cell stack, a compressor and a turbo generator, the fuel cell stack comprising at least one high temperature fuel cell, each fuel cell comprising an electrolyte, an anode and a cathode, the compressor being arranged to supply at least a portion of the oxidant to the cathode of the at least one fuel cell, a fuel supply being arranged to supply to the anode of the at least one fuel cell, the fuel cell being arranged to supply a portion of the unused fuel from the anode of the at least one fuel cell to a combustor, an oxidant supply arranged to supply the combustor, the combustor being arranged to supply the combustor exhaust gases to a first inlet of a heat exchanger to the turbo generator, the at least a portion of the oxidant from the compressor and the unused oxidant from the cathode of the at least one fuel cell being arranged to be supplied to a second inlet of the heat exchanger to preheat the oxidant supplied to the cathode of the at least one fuel cell, the heat exchanger comprising a temperature sensor configured to measure the temperature at the second inlet of the heat exchanger, the heat exchanger being arranged to supply the at least a portion of the oxidant from the compressor and the unused oxidant from the cathode of the at least one fuel cell from a second outlet of the heat exchanger to the cathode of the at least one fuel cell; and
a controller, configured to determine a burner temperature of the high temperature fuel cell comprising a fuel cell stack and a burner, the fuel cell stack comprising at least one fuel cell, the controller configured to compare the burner temperature with a predetermined burner temperature set point to identify a burner temperature difference between the measured burner temperature and the predetermined burner temperature set point, and to control an amount of oxidant supplied to the burner to decrease or increase the amount of oxidant supplied to the burner thereby to reduce the burner temperature difference and control a fuel cell stack inlet temperature.

Optionally, the controller is configured to determining a predetermined fuel cell stack current set point; and to determine a corrective function to vary the predetermined burner temperature set point based on the predetermined fuel cell stack current set point to reduce the burner temperature difference and control the fuel cell stack inlet temperature.

Optionally, the controller is configured to determine the fuel cell stack temperature by measuring the temperature of the at least one fuel cell in the fuel cell system and to compare the measured stack temperature with a predetermined stack inlet temperature to identify a stack temperature difference and to determine a corrective function to vary the predetermined burner temperature set point to reduce the stack temperature difference.

The amount of oxidant may be varied by an air valve.

Optionally, the air valve is a generator module including a turbo generator to control airflow into the generator module. A rotational speed of the turbo generator may be controlled to adjust the amount of oxidant supplied to the burner.

In some embodiments, the fuel cell stack may be provided with a number of temperature sensors in the stack. Optionally, the fuel cell stack may comprise a number of fuel cell modules and each fuel cell module is provided with a temperature sensor.

In some embodiments, the temperature sensor may be a thermocouple.

In some embodiments the controller may be configured to determine the temperature difference using a measured stack temperature measured via the number of temperature sensors. The controller may be configured to calculate a mean, mode or median temperature difference.

In some embodiments, the controller may be configured to determine an average temperature difference via a proportional integral derivative controller.

In some embodiments, the controller may be configured to control the amount of oxidant supplied to the solid oxide fuel cell stack based on the average temperature difference.

In some embodiments, the turbo generator is configured to operate at a predetermined turbo generator set point. The turbo generator set point may correspond to a number of revolutions per minute and the amount of oxidant supplied to the cathode.

The turbo generator set point may range from approximately 58,000 revolutions per minute to approximately 200,000 revolutions per minute. The person skilled in the art will appreciate that the speed is related to the size of the fuel cell system and other speeds are envisaged.

Preferably, the turbo generator set point may range from approximately 72,000 revolutions per minute to approximately 96,000 revolutions per minute.

More preferably, the turbo generator set point may be approximately 84,000 revolutions per minute.

The temperature difference may correspond to an increase or a decrease in the number of revolutions per minute.

In some embodiments, a thermocouple may be positioned in an auxiliary loop, at the inlet to the heat exchanger.

According to the invention, there is provided a high temperature fuel cell comprising:
a fuel cell comprising a fuel cell stack and a burner, the fuel cell stack comprising at least one fuel cell, and
a controller, configured to determine a burner temperature of the high temperature fuel cell, wherein
the controller is configured to compare the burner temperature with a predetermined burner temperature set point to identify a burner temperature difference between the measured burner temperature and the predetermined burner temperature set point, and to control an amount of oxidant supplied to the burner to decrease or increase the amount of oxidant supplied to the burner thereby to reduce the burner temperature difference and control a fuel cell stack inlet temperature.

### BRIEF DESCRIPTION OF THE DRAWINGS

Embodiments of the invention are further described hereinafter with reference to the accompanying drawings, in which:
Figure 1 shows an example of a high-temperature fuel cell system;
Figure 2 shows an example of a high-temperature fuel cell system;
Figure 3 shows an example of a high-temperature fuel cell system.

### DETAILED DESCRIPTION

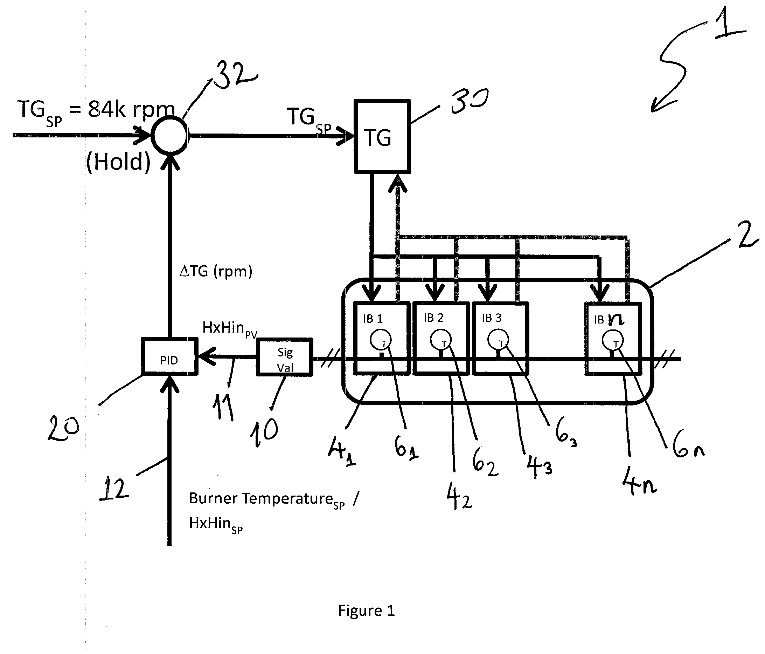

Figure 1 shows an apparatus 1 for controlling the internal temperature of a solid oxide fuel cell system comprising a fuel cell stack 2, the fuel cell stack 2 comprising a number of integrated blocks 4₁, 4₂, 4₃, 4ₙ of fuel cells. Each integrated block 4ₙ comprises at least one solid oxide fuel cell, each solid oxide fuel cell comprises an electrolyte, an anode and a cathode.

A number of burners 6₁, 6₂, 6₃, 6ₙ are arranged to supply at least a portion of an oxidant to the cathodes of the fuel cells and a fuel supply is arranged to supply to the anodes of the solid oxide fuel cells. The specific arrangement of the fuel cell system, the number of integrated blocks 4ₙ and the number of burners 6ₙ will depend upon the type of fuel cell, the size of fuel cell system 1 and power requirements of the fuel cell system 1. The fuel cell stack is arranged with a number of integrated blocks 4ₙ, and each integrated block 4ₙ has a burner 6ₙ arranged to supply the fuel cell stack with oxidant through a heat exchanger.

The burners 6₁, 6₂, 6₃, 6ₙ are each provided with a thermocouple adapted for the high temperatures experienced in a high temperature fuel cell environment.

A receiver 10 receives the signal providing a measure of temperature of at least one thermocouple in a burner 6ₙ or an integrated block 4ₙ. The receiver 10 is configured so that it can calculate a mean, mode, median or other average burner temperature from the measured signals received from at least one thermocouple. The measured burner temperature is an average calculated from a number of measured burner temperatures.

In certain embodiments it is not necessary to include a thermocouple at each burner 6ₙ. In certain arrangements only alternate burners 6ₙ may include a thermocouple.

In one example, a proportional-integral-derivative controller (PID controller) 20 receives the measured burner temperature 11 from the receiver 10, and calculates an error value as the difference between the predetermined burner temperature set point 12 and the predetermined burner temperature set point.

The PID controller 20 minimises the error by adjusting an oxidant valve 30 to control an amount of oxidant supplied to the fuel cell stack to decrease or increase the amount of oxidant supplied to the fuel cell stack thereby to reduce the burner temperature difference and control the fuel cell stack inlet temperature.

The oxidant value 30 is a generator module. The generator module 30 has a generator set point 32. The generator set point 32 corresponds to the pre-set revolutions per minute before any correction to the rotational speed of a turbo generator in the generator module 30 has taken place. In one example, the generator set point 32 is 84,000 rpm, but the set point of the generator module 30 will depend on the fuel cell system and, and the overall size of the system.

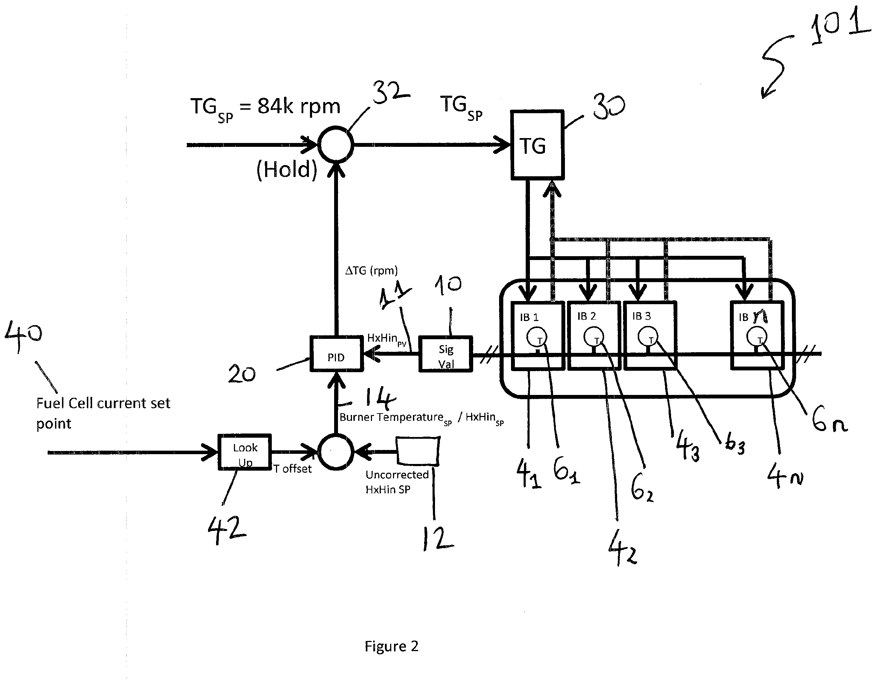

Figure 2 shows an apparatus 101 for controlling the temperature of a fuel cell system. An additional corrective function is incorporated into the apparatus based on the fuel cell stack current set point 40 and the predetermined burner temperature set point 12 (i.e. the uncorrected burner temperature). The fuel cell stack current set point 40 corresponds to a function that predetermines the stack inlet temperature based on the current across the fuel cells.

The predetermined fuel cell stack current set point 40 is determined 42 and a corrective function is determined to vary the predetermined burner temperature set point based on the predetermined fuel cell stack current set point, to reduce the burner temperature difference and control the fuel cell stack inlet temperature.

This corrected burner temperature 14 is used as described above, except the PID controller 20 receives the measured burner temperature from the receiver 10, and compares the measured burner temperature with the corrected burner temperature 14 (as opposed to an uncorrected but predetermined burner temperature set point 12) to identify a burner temperature difference between the measured burner temperature and the corrected burner temperature 14.

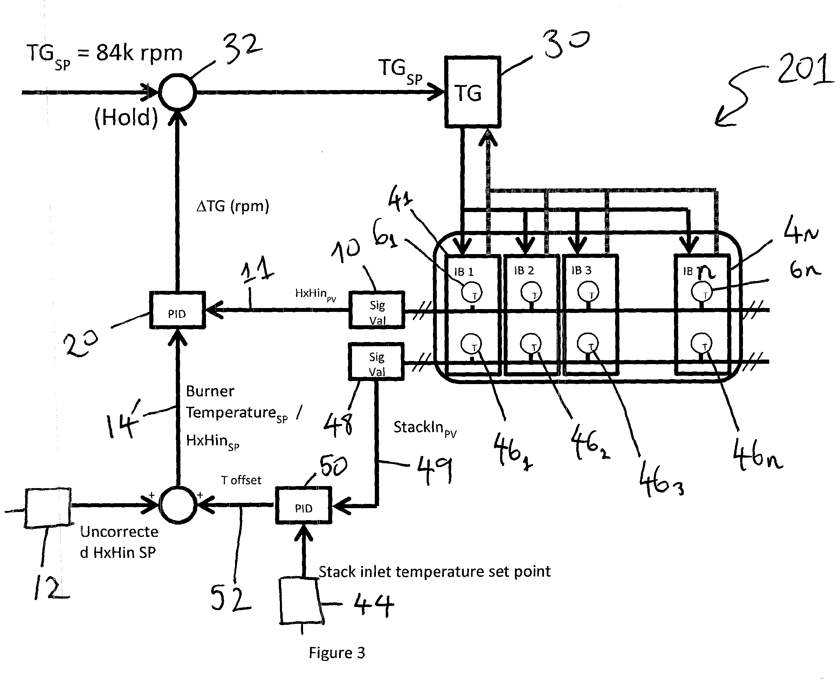

Figure 3 shows a further example of an apparatus 301 for controlling the temperature of a fuel cell system. In addition to the thermocouples provided at the burners 6₁, 6₂, 6₃, 6ₙ, further thermocouples 46₁, 46₂, 46₃, 46ₙ are located in the fuel cell stack to determine the fuel cell stack temperature by measuring the temperature of the at least one integrated block 4ₙ in the fuel cell system. A receiver 48 receives the signal from the thermocouple and 46₁, 46₂, 46₃, 46ₙ. The receiver 10 is configured so that it can calculate a mean, mode, median or other average burner temperature from the measured signals received from a plurality of thermocouple and 46₁, 46₂, 46₃, 46ₙ. The measured stack inlet temperature 49 may be an average calculated from a number of measured burner temperatures.

A PID controller 50 compares the measured stack temperature 49 received from a receiver 48 with a predetermined stack inlet temperature 44 to identify a stack temperature difference 52. The controller 50 determines a corrective function to vary the predetermined stack inlet temperature 44 with the measured stack inlet temperature 49 and calculates an error value as the difference between the predetermined stack inlet temperature 44 and the measured stack inlet temperature 49. This error value is incorporated into the predetermined stack inlet temperature 44 to deliver a temperature offset 52.

The temperature offset 52 is combined with the predetermined burner temperature set point 12 to achieve a corrected burner temperature 14' which is then sent to the controller 20. The controller compares the corrected burner temperature 14' and the measured burner temperature 11 received from the receiver 10, and calculates an error value as the difference between the corrected burner temperature 14' and the measured burner temperature 11.

The PID controller 20 minimises the error by adjusting the generator module 30 to control an amount of oxidant supplied to the burner 6ₙ to decrease or increase the amount of oxidant supplied to the burner 6ₙ thereby to reduce the burner temperature difference and control the fuel cell stack 2 inlet temperature.

The predefined stack inlet temperature set point 44 is set between approximately 750 degrees C and approximately 1150 degrees C. In one embodiment, the predefined stack temperature set point 12 is set at 900 degrees C.

The generator module 30 includes a generator set point 32. This is typically held at a value dependent on the solid oxide fuel cell system requirements. In and embodiment the generator set point 32 ranges from approximately 58,000 revolutions per minute to approximately 200,000 revolutions per minute.

In another embodiment, the generator set point 32 ranges from approximately 72,000 revolutions per minute to approximately 96,000 revolutions per minute.

In another embodiment, the generator set point 32 is approximately 84,000 revolutions per minute. The generator module 30 is effectively an air valve that controls the air flow to the fuel cell stack 2. The controller 20 controls the amount of oxidant supplied to the cathode by controlling the rotational speed of a turbo generator to decrease or increase the oxidant supplied to the cathode depending on the determined temperature correction.

The fuel cell stack comprises a number of integrated blocks 4ₙ, and each integrated block 4ₙ comprises a plurality of fuel cells.

The stack temperature is dependent on the fuel cell system and is set by the user. Although the present invention has been described with reference to a solid oxide fuel cell system comprising a solid oxide fuel cell stack consisting of solid oxide fuel cells the present invention is equally applicable to a molten carbonate fuel cell system comprising a molten carbonate fuel cell stack consisting of molten carbonate fuel cells or other high temperature fuel cell systems comprising high temperature fuel cell stacks consisting of high temperature fuel cells. High temperature fuel cells operate at temperatures in the region of 500°C to 1100°C, for example solid oxide fuel cells operate at temperatures in the region of 500°C to 1100°C, e.g. 850°C to 1100°C, or in the region of around 900°C depending on the design of the system, and molten carbonate fuel cells operate at temperatures in the region of 600°C to 700°C.

Fuel utilisation may also be incorporated into the temperature control system and method. For example, the current flowing through the fuel cell is set to satisfy the load demand to the fuel cell system. Fuel injected into the fuel cell system is controlled according to a proportional relationship with the current flowing through the fuel cell.

In one example, the fuel utilisation is constant, and in another example fuel utilisation is varied. A variable fuel utilisation strategy may improve transient response of the system, or a variable fuel utilisation may be beneficial for part power performance because changes to the fuel utilisation may advantageously control the temperature in the fuel cells, and be beneficial for operation at low power.

In all examples, an additional corrective function can be incorporated into the apparatus based on the fuel cell stack current set point 40 and the predetermined burner temperature set point 12 (i.e. the uncorrected burner temperature). In such an arrangement, the predetermined fuel cell stack current set point 40 is determined 42 and a corrective function is determined to vary the predetermined burner temperature set point based on the predetermined fuel cell stack current set point, to reduce the burner temperature difference and control the fuel cell stack inlet temperature.

An advantage of the method and apparatus is that the internal temperature of the fuel cell is controlled by controlling the amount of oxidant supplied to the burner 6ₙ and/or the fuel cell stack 2. Another benefit is that the temperature of the fuel cell stack 2 is controlled in a dynamic, effective and stable manner even when the load across the fuel cell stack 2 varies. The benefit of measuring the burner temperature and basing a corrective feedback function on the measured burner temperature is that the temperature control is far quicker applying a control at the fuel cell stack 2 because thermal changes are identified more rapidly at the burner 6ₙ and therefore the method provides feedback on the thermal change to the fuel cell system 1 more rapidly compared with determining the stack temperature for example.

The fuel cell system 1 includes at least one fuel cell stack 2. The fuel cell stack 2 includes at least one integrated block 4ₙ. Each integrated block may include a temperature sensor.

Each integrated block includes at least one burner 6ₙ and at least one burner 6ₙ includes a temperature sensor located at an outlet of the burner 6ₙ. Alternatively, the temperature sensors may be located downstream of the burners 6ₙ.

It will be clear to a person skilled in the art that features described in relation to any of the embodiments described above can be applicable interchangeably between the different embodiments. The embodiments described above are examples to illustrate various features of the invention.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A high temperature fuel cell system comprising:
a fuel cell stack, a compressor and a valve,
the fuel cell stack comprising at least one fuel cell, each fuel cell comprising an electrolyte, an anode and a cathode,
the compressor being arranged to supply at least a portion of the oxidant to the cathode of the at least one fuel cell, a fuel supply being arranged to supply to the anode of the at least one fuel cell, the fuel cell being arranged to supply a portion of the unused fuel from the anode of the at least one fuel cell to a burner, an oxidant supply arranged to supply the burner,
the burner being arranged to supply the burner exhaust gases to a first inlet of a heat exchanger to the valve, the at least a portion of the oxidant from the compressor and the unused oxidant from the cathode of the at least one fuel cell being arranged to be supplied to a second inlet of the heat exchanger to preheat the oxidant supplied to the cathode of the at least one fuel cell,
the heat exchanger comprising a temperature sensor configured to measure the temperature at the second inlet of the heat exchanger, the heat exchanger being arranged to supply the at least a portion of the oxidant from the compressor and the unused oxidant from the cathode of the at least one fuel cell from a second outlet of the heat exchanger to the cathode of the at least one fuel cell; and
a controller, configured to determine a burner temperature of the high temperature fuel cell comprising a fuel cell stack and a burner, the fuel cell stack comprising at least one fuel cell, the controller configured to compare the burner temperature with a predetermined burner temperature set point to identify a burner temperature difference between the measured burner temperature and the predetermined burner temperature set point, and to control an amount of oxidant supplied to the burner by controlling an oxidant valve to decrease or increase the amount of oxidant supplied to the burner thereby to reduce the burner temperature difference and control a fuel cell stack inlet temperature.

2. A high temperature fuel cell system according to claim 1, wherein the controller is configured to determining a predetermined fuel cell stack current set point; and to determine a corrective function to vary the predetermined burner temperature set point based on the predetermined fuel cell stack current set point to reduce the burner temperature difference and control the fuel cell stack inlet temperature.

3. A high temperature fuel cell system according to claim 1 or 2, wherein the controller is configured to determine the fuel cell stack temperature by measuring the temperature of the at least one fuel cell in the fuel cell system and to compare the measured stack temperature with a predetermined stack inlet temperature to identify a stack temperature difference and to determine a corrective function to vary the predetermined burner temperature set point to reduce the stack temperature difference.

4. A high temperature fuel cell system as claimed in any of claims 1 to 3, wherein the valve is a rotational speed of a turbo generator.

5. A high temperature fuel cell system as claimed in any of claims 1 to 4, wherein the fuel cell stack comprises a number of burners and a temperature sensor located at each outlet to each burner.

6. A high temperature fuel cell system as claimed in claim 4 or 5, wherein the fuel cell stack comprises a number of integrated blocks and each fuel cell module is provided with a temperature sensor.

7. A high temperature fuel cell system as claimed in claim 6, wherein the temperature sensor is a thermocouple.

8. A high temperature fuel cell system as claimed in any of claims 5 to 7, wherein the controller is configured to determine a second temperature difference using a measured stack temperature measured by the number of temperature sensors.

9. A high temperature fuel cell system as claimed in any of claims 5 to 8, wherein the controller is configured to calculate a mean, mode or median burner temperature and/or measured stack temperature from the temperature sensors.

10. A high temperature fuel cell system as claimed in any of claims 1 to 9, wherein the controller is configured to determine an average burner temperature difference via a proportional integral derivative controller.

11. A high temperature fuel cell system as claimed in claim 10, wherein the controller is configured to control the amount of oxidant supplied to the burner to reduce the average burner temperature difference.

12. A high temperature fuel cell system as claimed in any of claims 1 to 11, wherein a generator module is configured to operate at a predetermined generator set point.

13. A high temperature fuel cell system as claimed in claim 12, wherein the generator set point corresponds to a number of revolutions per minute and the generator set point ranges from approximately 60,000 revolutions per minute to approximately 100,000 revolutions per minute; or the generator set point ranges from approximately 72,000 revolutions per minute to approximately 96,000 revolutions per minute; or the generator set point is approximately 84,000 revolutions per minute.

## Patentansprüche

1. Hochtemperatur-Brennstoffzellensystem, das aufweist:
einen Brennstoffzellenstapel, einen Verdichter und ein Ventil,
wobei der Brennstoffzellenstapel mindestens eine Brennstoffzelle aufweist, wobei jede Brennstoffzelle einen Elektrolyt, eine Anode und eine Kathode aufweist,
wobei der Verdichter eingerichtet ist, mindestens einen Anteil des Oxidationsmittels der Kathode der mindestens einen Brennstoffzelle zuzuführen, wobei eine Brennstoffzufuhr eingerichtet ist, die Anode der mindestens einen Brennstoffzelle zu versorgen, wobei die Brennstoffzelle eingerichtet ist, einen Anteil des ungenutzten Brennstoffs von der Anode der mindestens einen Brennstoffzelle einem Brenner zuzuführen, wobei eine Oxidationsmittelzufuhr eingerichtet ist, den Brenner zu versorgen,
wobei der Brenner eingerichtet ist, die Brennerabgase einem ersten Einlass eines Wärmetauschers zum Ventil zuzuführen, wobei der mindestens eine Anteil des Oxidationsmittels aus dem Verdichter und des ungenutzten Oxidationsmittels von der Kathode der mindestens einen Brennstoffzelle eingerichtet ist, einem zweiten Einlass des Wärmetauschers zugeführt zu werden, um das Oxidationsmittel vorzuheizen, das der Kathode der mindestens einen Brennstoffzelle zugeführt wird,
wobei der Wärmetauscher einen Temperatursensor aufweist, der konfiguriert ist, die Temperatur am zweiten Einlass des Wärmetauschers zu messen, wobei der Wärmetauscher eingerichtet ist, den mindestens einen Anteil des Oxidationsmittels aus dem Verdichter und des ungenutzten Oxidationsmittels von der Kathode der mindestens einen Brennstoffzelle von einem zweiten Auslass des Wärmetauschers zur Kathode der mindestens einen Brennstoffzelle zuzuführen; und
eine Steuereinrichtung, die konfiguriert ist, eine Brennertemperatur der Hochtemperatur-Brennstoffzelle festzulegen, die einen Brennstoffzellenstapel und einen Brenner aufweist, wobei der Brennstoffzellenstapel mindestens eine Brennstoffzelle aufweist, wobei die Steuereinrichtung konfiguriert ist, die Brennertemperatur mit einem vorgegebenen Brennertemperatur-Sollwert zu vergleichen, um eine Brennertemperaturdifferenz zwischen der gemessenen Brennertemperatur und dem vorgegebenen Brennertemperatur-Sollwert zu ermitteln, und eine Menge des Oxidationsmittels, das dem Brenner zugeführt wird, durch Steuern eines Oxidationsmittelventils zu steuern, um die Menge des dem Brenner zugeführten Oxidationsmittels zu senken oder zu erhöhen, um dadurch die Brennertemperaturdifferenz zu reduzieren und eine Einlasstemperatur des Brennstoffzellenstapels zu steuern.

2. Hochtemperatur-Brennstoffzellensystem nach Anspruch 1, wobei die Steuereinrichtung konfiguriert ist, einen vorgegebenen Stromsollwert des Brennstoffzellenstapels und eine Korrekturfunktion festzulegen, um den vorgegebenen Brennertemperatur-Sollwert beruhend auf dem vorgegebenen Stromsollwert des Brennstoffzellenstapels zu ändern, um die Brennertemperaturdifferenz zu reduzieren und die Einlasstemperatur des Brennstoffzellenstapels zu steuern.

3. Hochtemperatur-Brennstoffzellensystem nach Anspruch 1 oder 2, wobei die Steuereinrichtung konfiguriert ist, die Brennstoffzellenstapel-Temperatur durch Messen der Temperatur der mindestens einen Brennstoffzelle im Brennstoffzellensystem festzulegen und die gemessene Stapeltemperatur mit einer vorgegebenen Stapeleinlasstemperatur zu vergleichen, um eine Stapeltemperaturdifferenz zu ermitteln und eine Korrekturfunktion festzulegen, um den vorgegebenen Brennertemperatur-Sollwert zu verändern, um die Stapeltemperaturdifferenz zu reduzieren.

4. Hochtemperatur-Brennstoffzellensystem nach einem der Ansprüche 1 bis 3, wobei das Ventil eine Drehzahl eines Turbogenerators ist.

5. Hochtemperatur-Brennstoffzellensystem nach einem der Ansprüche 1 bis 4, wobei der Brennstoffzellenstapel eine Anzahl von Brennern und einen Temperatursensor aufweist, der an jedem Auslass zu jedem Brenner angeordnet ist.

6. Hochtemperatur-Brennstoffzellensystem nach Anspruch 4 oder 5, wobei der Brennstoffzellenstapel eine Anzahl von integrierten Blöcken aufweist und jedes Brennstoffzellenmodul mit einem Temperatursensor versehen ist.

7. Hochtemperatur-Brennstoffzellensystem nach Anspruch 6, wobei der Temperatursensor ein Thermoelement ist.

8. Hochtemperatur-Brennstoffzellensystem nach einem der Ansprüche 5 bis 7, wobei die Steuereinrichtung konfiguriert ist, eine zweite Temperaturdifferenz mittels einer gemessenen Stapeltemperatur festzulegen, die durch die Anzahl der Temperatursensoren gemessen wird.

9. Hochtemperatur-Brennstoffzellensystem nach einem der Ansprüche 5 bis 8, wobei die Steuereinrichtung konfiguriert ist, einen Mittelwert, Modalwert oder Median der Brennertemperatur und/oder der gemessenen Stapeltemperatur von den Temperatursensoren zu berechnen.

10. Hochtemperatur-Brennstoffzellensystem nach einem der Ansprüche 1 bis 9, wobei die Steuereinrichtung konfiguriert ist, eine durchschnittliche Brennertemperaturdifferenz über einen Proportional-Integral-Differential-Regler festzulegen.

11. Hochtemperatur-Brennstoffzellensystem nach Anspruch 10, wobei die Steuereinrichtung konfiguriert ist, die Menge des dem Brenner zugeführten Oxidationsmittels zu steuern, um die durchschnittliche Brennertemperaturdifferenz zu reduzieren.

12. Hochtemperatur-Brennstoffzellensystem nach einem der Ansprüche 1 bis 11, wobei ein Generatormodul konfiguriert ist, bei einem vorgegebenen Generatorsollwert zu arbeiten.

13. Hochtemperatur-Brennstoffzellensystem nach Anspruch 12, wobei der Generatorsollwert einer Anzahl von Umdrehungen pro Minute entspricht und der Generatorsollwert von annähernd 60000 Umdrehungen pro Minute bis annähernd 100000 Umdrehungen pro Minute reicht; oder der Generatorsollwert von annähernd 72000 Umdrehungen pro Minute bis annähernd 96000 Umdrehungen pro Minute reicht; oder der Generatorsollwert annähernd 84000 Umdrehungen pro Minute beträgt.

## Revendications

1. Système de pile à combustible haute température, comprenant :
un empilement de piles à combustible, un compresseur et une soupape,
l'empilement de piles à combustible comprenant au moins une pile à combustible, chaque pile à combustible comprenant un électrolyte, une anode et une cathode,
le compresseur étant prévu pour refouler au moins une partie de l'oxydant vers la cathode de ladite au moins une pile à combustible, une alimentation en combustible étant prévue pour alimenter l'anode de ladite au moins une pile à combustible, la pile à combustible étant prévue pour refouler une partie du combustible inutilisé de l'anode de ladite au moins une pile à combustible vers un brûleur, une alimentation en oxydant étant prévue pour alimenter le brûleur,
le brûleur étant prévu pour refouler les gaz brûlés du brûleur vers une première entrée d'un échangeur de chaleur vers la soupape, ladite au moins une partie de l'oxydant du compresseur et de l'oxydant inutilisé de la cathode de ladite au moins une pile à combustible étant destinée à être refoulée vers une deuxième entrée de l'échangeur de chaleur pour préchauffer l'oxydant refoulé vers la cathode de ladite au moins une pile à combustible,
l'échangeur de chaleur comprenant un capteur de température prévu pour mesurer la température à la deuxième entrée de l'échangeur de chaleur, l'échangeur de chaleur étant prévu pour refouler ladite au moins une partie de l'oxydant du compresseur et de l'oxydant inutilisé de la cathode de ladite au moins une pile à combustible d'une deuxième sortie de l'échangeur de chaleur vers la cathode de ladite au moins une pile à combustible ; et
un régulateur prévu pour déterminer une température de brûleur de la pile à combustible haute température comprenant un empilement de piles à combustible et un brûleur, l'empilement de piles à combustible comprenant au moins une pile à combustible, le régulateur étant prévu pour comparer la température de brûleur à une température de brûleur de consigne définie afin d'identifier un différentiel de températures de brûleur entre la température de brûleur mesurée et la température de brûleur de consigne définie, et pour commander une quantité d'oxydant refoulé vers le brûleur par commande d'une soupape d'oxydant pour diminuer ou augmenter la quantité d'oxydant refoulé vers le brûleur, afin de réduire ainsi le différentiel de températures de brûleur et commander une température d'entrée d'empilement de piles à combustible.

2. Système de pile à combustible haute température selon la revendication 1, où le régulateur est prévu pour déterminer une température de brûleur de consigne actuelle définie ; et pour déterminer une fonction correctrice pour changer la température de brûleur de consigne définie sur la base de la température de brûleur de consigne actuelle définie afin de réduire le différentiel de températures de brûleur et commander la température d'entrée d'empilement de piles à combustible.

3. Système de pile à combustible haute température selon la revendication 1 ou la revendication 2, où le régulateur est prévu pour déterminer la température d'empilement de piles à combustible par mesure de la température de ladite au moins une pile à combustible dans le système de pile à combustible et pour comparer la température mesurée à une température d'entrée d'empilement définie afin d'identifier un différentiel de température d'empilement et déterminer une fonction correctrice pour changer la température de brûleur de consigne définie afin de réduire le différentiel de température d'empilement.

4. Système de pile à combustible haute température selon l'une des revendications 1 à 3, où la soupape est la vitesse de rotation d'un turbogénérateur.

5. Système de pile à combustible haute température selon l'une des revendications 1 à 4, où l'empilement de piles à combustible comprend une pluralité de brûleurs et un capteur de température disposé à chaque sortie vers chaque brûleur.

6. Système de pile à combustible haute température selon la revendication 4 ou la revendication 5, où l'empilement de piles à combustible comprend une pluralité de blocs intégrés et chaque module de pile à combustible est pourvu d'un capteur de température.

7. Système de pile à combustible haute température selon la revendication 6, où le capteur de température est un thermocouple.

8. Système de pile à combustible haute température selon l'une des revendications 5 à 7, où le régulateur est prévu pour déterminer un deuxième différentiel de température au moyen d'une température d'empilement mesurée par la pluralité de capteurs de température.

9. Système de pile à combustible haute température selon l'une des revendications 5 à 8, où le régulateur est prévu pour calculer une moyenne, une médiane ou un mode de température de brûleur et/ou de température d'empilement mesurée par les capteurs de température.

10. Système de pile à combustible haute température selon l'une des revendications 1 à 9, où le régulateur est prévu pour déterminer un différentiel de températures de brûleur moyen par l'intermédiaire d'un régulateur proportionnel intégral dérivé.

11. Système de pile à combustible haute température selon la revendication 10, où le régulateur est prévu pour commander la quantité d'oxydant refoulé vers le brûleur pour réduire le différentiel de températures de brûleur moyen.

12. Système de pile à combustible haute température selon l'une des revendications 1 à 11, où un module de générateur est prévu pour fonctionner à une température de consigne de générateur définie.

13. Système de pile à combustible haute température selon la revendication 12, où la température de consigne de générateur correspond à une pluralité de tours par minute et le point de consigne de générateur est compris entre sensiblement 60.000 tours par minute et sensiblement 100.000 tours par minute ; ou le point de consigne de générateur est compris entre sensiblement 72.000 tours par minute et sensiblement 96.000 tours par minute ; ou le point de consigne de générateur est sensiblement de 84.000 tours par minute.
